# EUROPÄISCHE PATENTANMELDUNG

(11) **EP 0 658 392 A1**
(43) Veröffentlichungstag der Anmeldung: **21.06.1995**
(21) Anmeldenummer: 94120090.9
(22) Anmeldetag: 19.12.1994
(51) Int. Cl.: B23K 9/20

(54) **Schweisskopf für eine Bolzenschweissvorrichtung**

(30) Priorität: 19.12.1993 DE 4343299; 29.09.1994 DE 4434911
(71) Anmelder: Welz, Willy Dr., D-82152 Krailling (DE); Bolzenschweisstechnik Heinz Soyer GmbH, D-82237 Wörthsee (DE)
(72) Erfinder: Welz, Willy, Dr., D-82152 Krailling (DE)
(74) Vertreter: von Kirschbaum, Albrecht, Dipl.-Ing.

(57) **Zusammenfassung**

Die Erfindung betrift einen Schweißkopf für eine Bolzenschweißvorrichtung für das Bolzenschweißen mit Hubzündung mit einem in axialer Richtung verschiebbar angeordneten, gegen eine Rückstellkraft aus einer Ausgangsstellung auslenkbaren Kolben, dessen eines Ende mit einem Bolzenhalter für einen zu verschweißenden Bolzen zusammenwirkt, wobei ein erster und zweiter axial verschiebbarer Schlitten (45, 47) vorgesehen ist, wobei der erste und zweite Schlitten mittels eines ersten federnden Elements (51) verkoppelt sind und wobei auf dem ersten und zweiten Schlitten jeweils eine erste und zweite steuerbare Vorrichtung (55, 57, 59, 61) zum Verkoppeln des ersten und zweiten Schlittens mit dem Kolben (9) und/oder einem in axialer Richtung nicht-verschiebbar gehaltenen oder gehäusefesten Teil (3) des Schweißkopfes (1) angeordnet ist. Des weiteren betrifft die Erfindung eine Bolzenschweißvorrichtung mit einem derartigen, in geeigneter Weise angesteuerten Schweißkopf.

## Beschreibung

Die Erfindung betrifft einen Schweißkopf für eine Bolzenschweißvorrichtung für Bolzenschweißen mit Hubzündung nach dem Oberbegriffs des Patentanspruchs 1.

Bei bekannten Schweißköpfen für das Bolzenschweißen nach dem Hubzündungs-Schweißverfahren wird in der Praxis fast ausschließlich ein Hubmagnet-Federsystem für das Abheben des Bolzens vom Werkstück und das anschließende Eintauchen des Bolzens in die Schmelze verwendet. Ein Bolzenschweißkopf bzw. eine Bolzenschweißpistole, welche nach diesem Bewegungsprinzip arbeitet, ist beispielsweise in der DE 35 32 251 A1 beschrieben.

Bei dieser bekannten Bolzenschweißpistole ist ein auf dem Kolben lose angeordneter Hubring vorgesehen, der für die Hubbewegung mittels eines durch den Hubmagneten in axialer Richtung des Kolbens bewegten Fingers axial bewegbar ist. Auf diese Weise können unterschiedliche Bolzenlängen innerhalb eines vorgegebenen Toleranzbereichs ausgeglichen werden, da der Kolben nach dem Aufsetzen der Pistole bzw. des Bolzens auf das Werkstück gegen die Kraft einer Feder gegen einen Anschlag bewegt und hierbei der Kolben durch den Hubring geschoben wird. Erst nach erfolgtem Toleranzausgleich wird für die Hubbewegung der Finger mittels des Hubmagneten axial bewegt und hierdurch der Hubring gegenüber dem Kolben verkippt, auf diese Weise mit dem Kolben kraftschlüssig verkoppelt und somit der Kolben in der gewünschten axialen Richtung gegen die Kraft einer Feder bewegt. Dieses Prinzip des Toleranzausgleichs vor der Hubbewegung des Kolbens wird als Floating-lift-Prinzip bezeichnet. Nach dem Spannen der Feder und dem Ablauf der erforderlichen Schweißzeit wird der Hubmagnet abgeschaltet, so daß sich der Kolben unter der rückstellenden Kraft der Feder in Richtung auf das Werkstück bewegt und der Bolzen in die Schmelze eintaucht. Da häufig sehr kurze Schweißzeiten erforderlich sind, müssen die Kolbenbewegungen entsprechend schnell erfolgen, wodurch für die Eintauchbewegung eine relativ harte Feder erforderlich wird.

Ein Nachteil dieses Prinzips der Verwendung eines Hubmagneten zur axialen Bewegung des Kolbens besteht somit darin, daß der Hubmagnet wegen der aufzubringenden, relativ großen Kräfte entsprechend groß dimensioniert werden muß und daher groß und schwer ist. Die Forderung der Praxis nach baukleinen und leichten Schweißpistolen kann mit diesem Prinzip daher kaum verwirklicht werden.

Ein weiterer Nachteil dieser bekannten Bolzenschweißpistole ist, daß der Klemmvorgang des Hubrings auf dem Kolben häufig nicht mit der erforderlichen Genauigkeit und Reproduzierbarkeit erfolgt. Zudem wird durch die Abnutzung der Klemmkanten des Hubrings ein häufiges Austauschen dieses Verschleißteils erforderlich.

Gemäß der Erfindung soll daher ein leichter, baukleiner Schweißkopf für das Bolzenschweißverfahren mit Hubzündung geschaffen werden, der zudem die Anforderungen an die Genauigkeit der Kolbenbewegungen, insbesondere hinsichtlich des Hubs und der Eintauchtiefe, erfüllt. Des weiteren liegt der Erfindung die Aufgabe zugrunde, eine Bolzenschweißvorrichtung mit einem solchen, in geeigneter Weise angeteuerten Schweißkopf zu schaffen.

Gemäß der Erfindung ist diese Aufgabe mit den Merkmalen des Anspruches 1 oder 12 gelöst.

Bei dem Schweißkopf nach der Erfindung wird ein aus zwei in axialer Richtung des Kolbens beweglichen, mittels eines federnden Elements gekoppelten Schlitten bestehendes System durch die Aufsetzbewegung des Schweißkopfes bzw. des Bolzens auf das Werkstück gespannt und somit die Energie dieses Aufsetzvorgangs in dem federnden Element gespeichert. Die Bewegung des Kolbens für das Ausführen des Schweißvorgangs wird dann durch eine gesteuerte, abwechselnde Verkopplung jeweils eines der Schlitten mit dem zu bewegenden Kolben und/oder einem gehäusefesten Teil des Schweißkopfes erreicht.Ein Hubmagnet, der diese relativ große Kraft aufbringen muß, ist daher nicht mehr erforderlich.

Bei der bevorzugten Ausführungsform der Erfindung wird die Verkopplung der Schlitten mittels jeweils zweier steuerbarer, auf den Schlitten angeordneter Magneten bewirkt. Durch die Erregung der Magnete können die Schlitten somit mit dem Kolben und/oder einem gehäusefesten Teil des Schweißkopfes gekoppelt werden.

Hierdurch ergibt sich der Vorteil des Floating-lift-Prinzips, wobei gegenüber bekannten Schweißköpfen zudem die erforderliche Genauigkeit der Kolbenbewegung nach dem Toleranzausgleich gewährleistet ist. Bei der bevorzugten Ausführungsform der Erfindung ist der zweite Schlitten gegen die Kraft eines zweiten federnden Elements auslenkbar, so daß hierdurch die Hubbewegung des Kolbens beeinflußbar und eine Rückstellung der Schlitten in eine Ausgangslage gewährleistet ist.

Des weiteren ist die Bewegung des ersten und zweiten Schlittens bei der bevorzugten Ausführungsform der Erfindung jeweils mittels eines verstellbaren Anschlags begrenzt, wobei der Anschlag des ersten Schlittens die Summe aus Hub und Eintauchtiefe und der zweite Anschlag den Hub festlegt.

Es hat sich gezeigt, daß das federnde Element zwischen den beiden axial verschiebbaren Schlitten vorzugsweise unter Vorspannung stehen sollte, um trotz des relativ geringen Spannweges beim Aufsetzen des Schweißkopfes auf das Werkstück die erforderlichen Federkräfte zu erreichen.

Gemäß der Erfindung ist dieses weitere Problem durch die Merkmale des Anspruchs 3 gelöst.Bei dieser weiteren Ausführungsform der Erfindung wird die Verkopplung der Schlitten mittels jeweils zweier steuerbarer, auf den Schlitten angeordneter Magnete bewirkt, deren Wicklungen auf Ringen vorgesehen sind, welche auf einer Achse verschiebbare geführt sind. Die Wicklungen sind dabei vorzugsweise in seitlichen Ausnehmungen der Ringe vorgesehen, wobei die Wicklungsachse im wesentlichen senkrecht zur Bewegungsrichtung der Ringe liegt.

Die Bewegung der Ringe auf der Achse ist bei dieser Ausführungsform jeweils durch den fest mit der Achse verbundenen Anschlag begrenzt, wobei die Achse ihrerseits axial verschiebbar ausgebildet ist. Auch ist die Achse vorzugsweise mittels eines zweiten federnden Elements zusammen mit dem zweiten Schlitten in ihrer Ausgangsstellung bewegbar. Auf diese Weise erfolgt nach jedem Schweißvorgang und dem Entkoppeln der Schlitten eine selbsttätige Rückstellung der Schlitten und der Achse in die Ausgangsstellung.

Die Einstellung des Hubs erfolgt bei dieser Ausführungsform vorzugsweise durch das Einstellen der axialen Position der Achse mittels einer geeigneten Einstellvorrichtung in der Weise, daß der zweite Schlitten, ausgehend von dem fest mit der Achse verbundenen, zweiten Anschlag, um den Hub gegen einen weiteren Anschlag bewegbar ist. Bei der bevorzugten Ausführungsform der Erfindung ist die Achse mit dem ringförmigen Schlitten fluchtend mit der Achse des Kolbens angeordnet.

Hierbei kann die Kopplung des Kolbens mit den Schlitten durch ein mit dem Kolben verbundenes Zylinder-Mantelsegment erfolgen, dessen gedachte Zylinderachse mit der Kolbenachse fluchtet und dessen Innenradius nur geringfügig größer ist als der Radius der ringförmigen Schlitten. Die Kopplung der Schlitten mit einem ortsfesten Teil kann in gleicher Weise durch die Verwendung eines ortsfesten Zylinder-Mantelsegments erfolgen. Selbstverständlich müssen die Zylinder-Mantelsegmente hierfür aus ferromagnetischem Material bestehen. Alle diese vorstehend aufgeführten Merkmale führen zu einem einfachen, stabilen und kostengünstigen Aufbau des Schweißkopfes, sowie zu einer Verbesserung des Bewegungsablaufs während des Schweißvorgangs.

Die Bolzenschweißvorrichtung nach Anspruch 12, in der ein derartiger Schweißkopf verwendet ist, gewährleistet den Vorteil, daß trotz der erforderlichen, vier steuerbaren Vorrichtungen nur zwei Steuerleitungen nötig sind, da jeweils zwei Vorrichtungen gleichzeitig angesteuert werden.

Weitere Ausführungsformen der Erfindung ergeben sich aus den Unteransprüchen.

Nachfolgend wird die Erfindung anhand der in den Zeichnungen dargestellten Ausführungseispielen näher erläutert. Es zeigen:
- Fig.1: eine erste Ausführungsform eines Schweißkopfes gemäß der Erfindung;
- Fig.2: einen schematischen zeitlichen Verlauf der Erregung der Magnet des Schweißkopfes in Fig.1;
- Fig.3: eine zweite Ausführungsform eines Schweißkopfes gemäß der Erfindung;
- Fig.4: eine dritte Ausführungsform des Schweißkopfes gemäß der Erfindung, und
- Fig.5: eine Schnittansicht entlang der Linie 6-6 in Fig.5

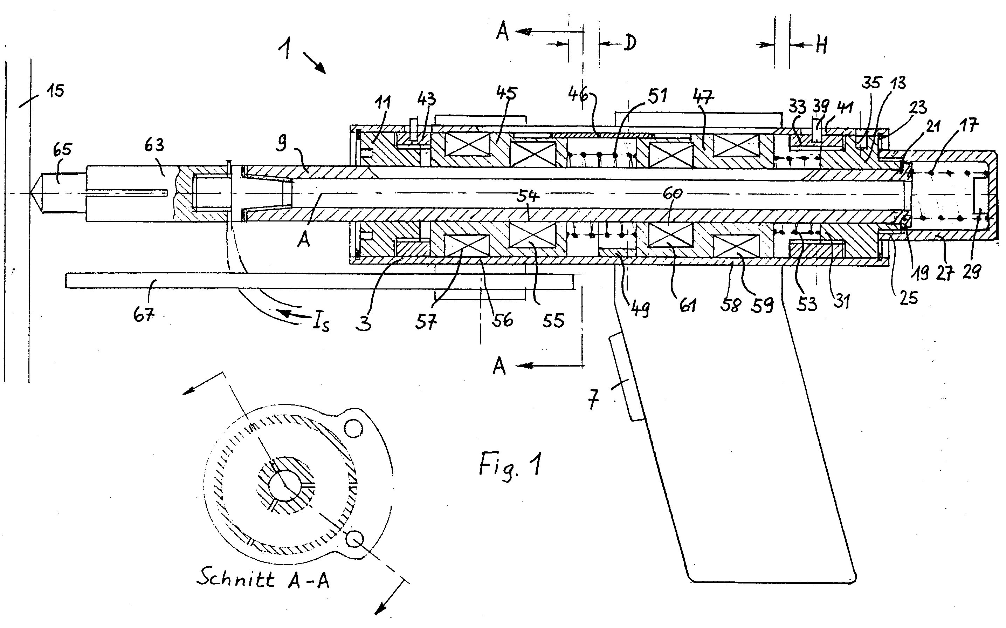

Fig.1 zeigt ein erstes Ausführungsbeispiel eines erfindungsgemäßen Schweißkopfes 1, der in Form einer Schweißpistole ausgebildet ist. Die Schweißpistole 1 besteht aus einem Gehäuse 3, mit einem Griffteil 5, an dem ein Auslöser 7 angeordnet ist, der in einer nicht dargestellten Steuereinheit ein Signal zum Start eines Bolzenschweißvorgangs auslöst.

In dem Gehäuse 3 ist ein Kolben 9 axial verschiebbar in Büchsen 11 und 13 gelagert. Der Kolben 9 ist hohlzylindrisch ausgebildet und beaufschlagt mit seinem einem Werkstück 15 abgewandtem Ende ein federndes Element 17, das, wie in Fig.1 dargestellt, als Schraubenfeder ausgebildet sein kann. Die Schraubenfeder 17 bewirkt die Rückstellung des Kolbens 9 in seine Ausgangslage, die durch eine ringförmige Erhebung 19 am betreffenden Ende des Kolbens 9 definiert ist, welche mit einer Stirnseite 21 der Büchse 13 zusammenwirkt.

Die Büchse 13 ist mittels eines Rings 23 in einer entsprechenden Nut in der Innenwandung des Gehäuses 3 in ihrer Position gehalten. An einem Fortsatz 25 der Büchse 13 ist ein Deckel 27 befestigt, beispielsweise aufgeschraubt, welcher zur Aufnahme und Lagerung des anderen Endes der Schraubenfeder 17 mittels eines Zapfens 29 dient. An ihrem dem Werkstück 15 zugewandten Ende weist die Büchse 13 einen Fortsatz 31 auf, auf welchem ein zylindrisches Anschlagteil 33 aufgeschraubt ist.

Durch das Drehen der Büchse 13 um die Kolbenachse A ergibt sich somit eine Justiermöglichkeit des Anschlagteils 33 in axialer Richtung. Zum Drehen der Büchse 13 muß der Deckel 27 mit der Büchse 13 verklemmt werden, was durch das Einsetzen eines Stiftes in eine radiale Bohrung 35 geschieht, wobei die Außenseite des Gehäuses 3 eine entsprechende Bohrung aufweisen muß. Um ein Mitdrehen des Anschlagteils 33 zu verhindern, weist dieses einen Stift 39 auf, der durch ein axial verlaufendes Langloch 41 im Gehäuse 3 ragt.

In entsprechender Weise ist ein Anschlagteil 43 an dem Werkstück 15 zugewandten ‰nde des Gehäuses 3 an der Büchse 11 angeordnet.

In dem zylindrisch ausgebildeten oberen Teil des Gehäuses 3 sind zwei axial bewegliche, ringförmige Schlitten 45, 47 um den Kolben 9 angeordnet. Die Bewegung der Schlitten ist durch das Anschlagteil 43 und den festen Anschlag bzw. durch den festen Anschlag 49 und das Anschlagteil 33 begrenzt. Die beiden Schlitten sind über ein z.B. als Schraubenfeder ausgebildetes federndes Element 51 verkoppelt. Der zweite Schlitten 47 beaufschlagt zudem ein weiteres, vorzugsweise als Schraubenfeder ausgebildetes federndes Element 53.

Jeder Schlitten 45, 47 aus ferromagnetischem Material trägt zwei ringförmige Wicklungen 55, 57 bzw. 59, 61 eines Elektromagneten 54, 56 bzw. 58, 60, wobei die Wicklungsachsen jeweils mit der Kolbenachse A identisch sind.

Die Wicklungen 55, 61 sind so angeordnet, daß sie im wesentlichen an den Außenumfang des Kolbens 9 angrenzen und die Wicklungen 57, 59 sind in entsprechender Weise so angeordnet, daß sie an die Innenwandung des Gehäuses 3 angrenzen, welches zumindest in diesem Bereich aus ferromgnetischem Material bestehen muß.Die Vorspannung der Feder 51 zwischen den Schlitten 45 und 47 wird durch eine Angel 46 erreicht, die den maximalen Abstand der Schlitten begrenzt, aber eine Abstandsverringerung zuläßt.

Bei Aktivierung der Elektromagneten 54, 56, 58 und 60 bzw. einer der Spulen 55, 57, 59, 61 wird daher eine Haltekraft zwischen den Schlitten 45, 47 und dem Kolben 9 bzw. dem Gehäuse 3 erzeugt. Zur Verbesserung der Halte- oder Klemmkräfte kann sowohl der Kolben 9 als auch das Gehäuse 3 in den entsprechenden Bereichen in axialer Richtung geschlitzt sein, wie in dem Schnitt A - A in Fig.1 gezeigt.

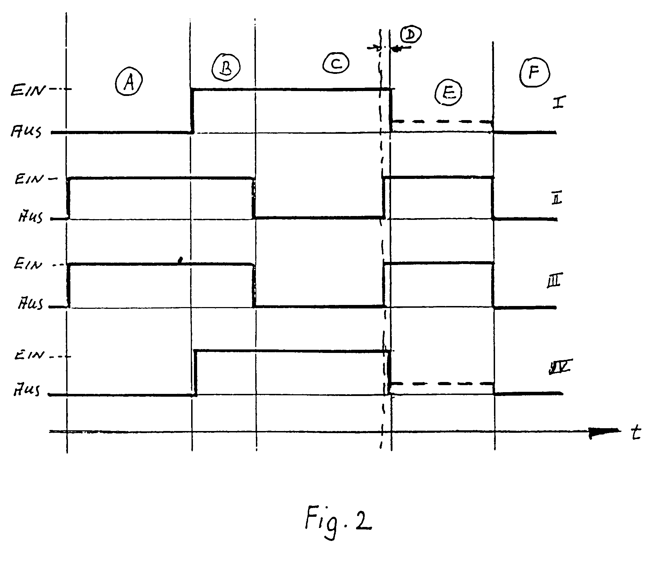

Nachfolgend wird der Ablauf eines Schweißvorgangs mit der Schweißpistole nach der Erfindung im einzelnen erläutert. Der zeitliche Ablauf des Aktivierens bzw. Deaktivierens der einzelnen Wicklungen ist in Fig.2 dargestellt, wobei die Kurven I, II, III, IV dem Erregungsverlauf der Wicklungen 57, 55, 59, 61 entsprechen.

Zunächst werden die Wicklungen 55 und 59 erregt, so daß der erste Schlitten 45 mit dem Kolben 9 und der zweite Schlitten 47 mit dem Gehäuse 3 verkoppelt ist. Dies stellt die Ausgangslage der Schweißpistole nach der Erfindung dar, die vor jedem Schweißvorgang bzw. nach dem Einschalten der Bolzenschweißvorrichtung eingenommen wird.

Anschließend wird die Schweißpistole 1 mit einem in einem am vorderen Ende des Kolbens 9 angeordneten Bolzenhalter 63 gehaltenen Bolzen 65 auf das Werkstück 15 aufgesetzt und solange gegen das Werkstück 15 gepreßt, bis ein am Gehäuse verstellbar angeordneter Anschlag 67 am Werkstück anliegt. Hierdurch wird zunächst der Kolben zusammen mit dem Schlitten 45 gegen den ortsfesten Anschlag 49 bewegt und gleichzeitig die Feder 51 gespannt, da der Schlitten 47 mit dem Gehäuse verkoppelt ist. Da der Anschlag 67 vorzugsweise so eingestellt wird, daß sich dessen Ende bei leicht auf das Werkstück 15 aufgesetztem Bolzen 65 in einem Abstand vom Werkstück befindet, der größer ist, als der Abstand D des Schlittens 45 vom Anschlag 49, rutscht der Kolben 9 nach dem Erreichen des Anschlags 49 gegenüber dem Schlitten 45 durch (Phase A in Fig.2).

Hierzu ist die Stromstärke der Wicklung 55 so zu wählen, daß die Haltekraft einerseits ausreichend groß ist, um ein Durchrutschen des Kolbens 9 für sämtliche selbsttätig ablaufenden Bewegungen des Kolbens zu verhindern, andererseits jedoch das vorstehend beschriebene Durchrutschen des Kolbens beim Aufsetzen der Pistole auf das Werkstück zu ermöglichen.

Nach diesem Spannen der Feder 51 wird der Schweißvorgang mittels des Auslösers 7 gestartet, woraufhin die nicht dargestllte Steuereinheit zusätzlich die Wicklungen 57 und 61 erregt, so daß der Kolben 9 nach wie vor in seiner Stellung verharrt, und den Schweißstrom des Vorstromlichtbogens einschaltet. Dabei gewährleistet das (kurzzeitige) Aktivieren aller vier Wicklungen einen definierten Übergang zu dem nächsten, nachstehend beschriebenen Schritt (Phase B in Fig.2)

Kurze Zeit nach dem Einschalten des Vorstromes werden die Wicklungen 55 und 59 deaktiviert, so daß der erste Schlitten 45 durch die Verkopplung mit dem Gehäuse 3 in seiner Position am Anschlag 49 verharrt und der zweite Schlitten 47 durch seine Verkopplung mit dem Kolben 9 zusammen mit diesem an den Anschlag 33 bewegt wird. Durch das Abheben der Bolzenspitze vom Werkstück wird der Vorstromlichtbogen gezogen (Phase C in Fig.2). Selbstverständlich müssen die Federn 51 und 53 dabei so aufeinander abgestimmt sein, daß die Kraft der gespannten Feder 51 ausreicht, um die Feder 53 und die Feder 17 um den mittels des Anschlagteils 33 eingestellten Hub H zusammenzudrücken.

Anschließend wird der Schweißstrom eine vorgegebene Zeit bis zum Eintauchen der angeschmolzenen Bolzenspitze in das werkstückseitige Schmelzbad zugeschaltet. Die Eintauchbewegung kann auf zwei verschiedene Arten erfolgen:
1. Bei Bolzen unter ca. 16mm Durchmesser werden die Wicklungen 57 und 61 deaktiviert, die Verbindung der Schlitten mit dem Kolben löst sich, die Federn 51 und 53 entspannen sich und der Eintauchvorgang erfolgt nur unter Einwirkung der Feder 17 bis zum werkstückseitigen Widerstand.
2. Bei größeren Bolzen wird ein definierter Eintauchweg (nach Phase C), wie folgt,erreicht: Zu den Wicklungen 57 und 61 werden die Wicklungen 55 und 59 (kurzzeitig) zugeschaltet, um erneut einen definierten Übergang zur nächstfolgenden Kolbenbewegung zu ermöglichen (Phase D in Fig.2)
Nach Ablauf der Schweißzeit wird die Eintauchbewegung des Kolbens 9 bzw. des Bolzens 65 gestartet. Hierzu werden die Wicklungen 61 und 57 deaktiviert, so daß der Kolben durch die Federkraftbeaufschlagung des mit dem Kolben verkoppelten Schlittens 45 bei gleichzeitig mit dem Gehäuse verkoppeltem Schlitten 47 in Richtung auf das Werkstück bewegt wird (Phase E in Fig.2). Die Bewegung des Kolbens in Richtung auf das Werkstück 15 wird dabei durch das Anschlagteil 43 begrenzt.

Die Bewegung des Kolbens in Richtung auf das Werkstück erfolgt somit um den Betrag des ursprünglichen Abstandes D des Schlittens 45 vom ortfesten Anschlag 49. D.h., der Weg D entspricht der Summe aus Hub H und Eintauchtiefe E, wobei der Hub H mittels des Anschlagteils 33 einstellbar ist.

In einer Ausführungsform der Erfindung kann bei der Bewegung des Kolbens 9 in Richtung auf das Werkstück auch die Wicklungen 57 und 61 teilweise aktiviert sein. Hierdurch kann eine Beeinflussung der Eintauchgeschwindigkeit, insbesondere ein Eintauchen mit einer bestimmten Geschwindigkeit und einer bestimmten Verzögerung, erreicht werden.

Nach dem Eintauchen des Bolzens 65 in die Schmelze des Werkstücks 15 wird der Schweißstrom abgeschaltet und sämtliche Wicklungen deaktiviert, so daß der Kolben aufgrund der Beaufschlagung mittels der Feder 17 seinen Ausgangszustand einnimmt (Phase F in Fig.2). Nach dem Erreichen des Ausgangszustandes werden erneut die Wicklungen 45 und 61 aktiviert, um einen erneuten Schweißvorgang zu ermöglichen (Phase A in Fig.2).

Bei diesem Verfahren zur Ansteuerung der Wicklungen 55, 57, 59, 61 ergibt sich der Vorteil, daß nur zwei getrennte Steuerkreise erforderlich sind, da jeweils die Wicklungen 55 und 59 bzw. 57 und 61 gleichzeitig angesteuert werden.

Nachteilig bei der in Fig.1 dargestellten Ausführungsform der Erfindung ist jedoch, daß der Kolben 9 zur Verbesserung der Halte- bzw. Klemmkräfte hohlzylindrisch ausgebildet und mit Längsschlitzen versehen werden muß. Eine zentrische Stromzuführung, d.h. eine Stromzuführung in der Achse A des Kolbens 9 ist in Fig.1 nicht vorgesehen, wodurch unerwünschte Blaseffekte, d.h. Ablenkungen des Lichtbogens durch die nicht rotationssymmetrischen Magnetfelder des zugeführten Schweißstroms, auftreten können.

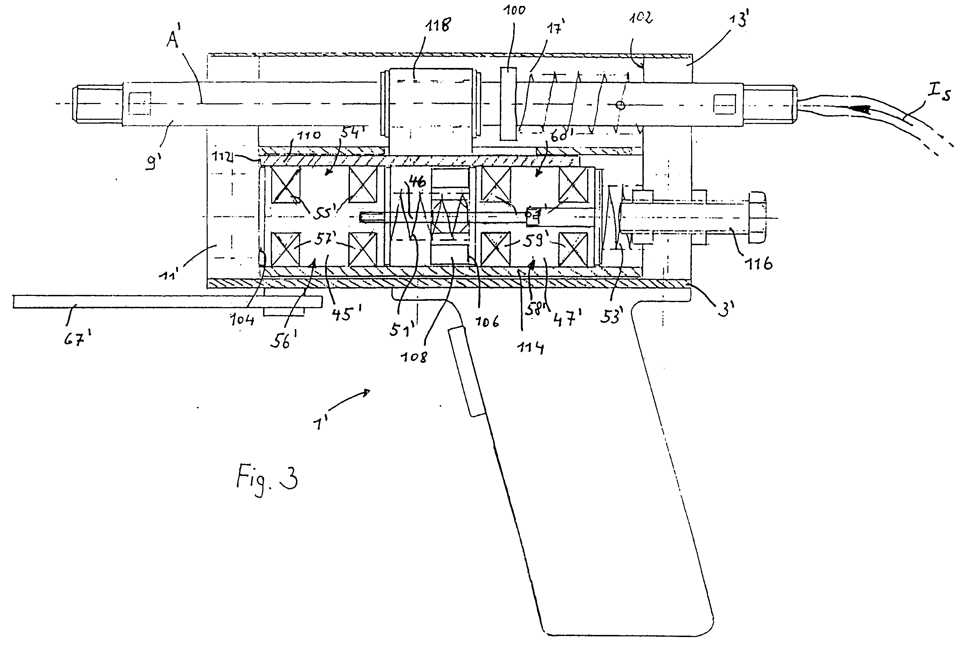

Die in den Fig.3 dargestellten Ausführungsformen der Erfindung vermeiden diese Nachteile durch eine spezielle Anordnung und Ausbildung der Wicklungen.

Bei der nachfolgenden Beschreibung der Ausführungsbeispiele der Fig.3 werden die den Elementen in Fig.1 entsprechenden Elemente mit einfach gestrichenen, identischen Bezugszeichen bezeichnet.

Die in Fig.3 gezeigte Ausführungsform eines als Schweißpistole ausgebildeten Schweißkopfes 1' weist einen im Gehäuse 3' axial verschiebbar gelagerten bzw. geführten Kolben 9' auf, der mittels einer Schraubenfeder 17' in seiner Ausgangslage gehalten wird, wobei die Schraubenfeder 17' mit einem Ende einen auf dem Kolben 9' fixierten Ring oder ringförmige Erhebung 100 und mit dem anderen Ende die Innenseite 102 der rückseitigen Lagerbüchse 13' der Schweißpistole 1' beaufschlagt.

Parallel zum Kolben 9' sind zwei in Richtung der Kolbenachse A' verschiebbare Schlitten 45' und 47' angeordnet, welche mittels einer Schraubenfeder gekoppelt sind. Der Schlitten 47' beaufschlagt mit seinem rückseitigen Ende eine weitere Schraubenfeder 53', welche zur Rückstellung der gekoppelten Schlitten in ihre Ausgangslage dient, in der der Schlitten 45' an der Innenwandung 104 der vorderen lagerbüchse 11' des Kolbens 9' und den Schlitten 47' an der rückseitigen Anschlagfläche 106 eines zwischen den Schlitten angeordneten verstellbaren Anschlags 108 anliegt. Eine Vorspannung der Feder 51' wird beispielsweise durch eine Schraube 46 in der Schlittenmitte erreicht, die den maximalen Abstand der Schlitten begrenzt und sich bei geringerem Abstand in der Bohrung bewegt.

Die Schlitten 45', 47' sind im Querschnitt vorzugsweise rechteckförmig ausgebildet, können jedoch auch jede andere für die nachstehend erläuterte Funktion geeignete Form aufweisen.

Auf jedem der Schlitten 45', 47' ist in deren dem Kolben 9' zugewandten Bereich jeweils eine Wicklung 55' bzw. 61' vorgesehen, deren Wicklungsachsen im wesentlichen senkrecht zur Kolbenachse A' verlaufen. Die Wicklungen sind vorzugsweise in Form von Topfmagneten 54' bzw. 60' ausgebildet, deren magnetischer Fluß im Bereich innerhalb der Wicklungen 55', 61' mittels eines ferromagnetischen Kerns geschlossen ist.

Die Wicklungen 55', 61' der Topfmagnete wirken mit einer mit dem Kolben 9' verbundenen, parallel zur dem Kolben zugewandten Oberfläche der Schlitten 45', 47' verlaufenden Platte 110 zusammen. Die Platte 110 ist dabei vorzugsweise, wie in Fig.3 dargestellt, so ausgebildet, daß das vordere Ende 112 der Platte 110 mit der Innenwandung 104 der Lagerbüchse 11' die Ausgangslage des Kolbens 9' definiert, d.h. die Lagerbüchse 11' wirkt als Anschlag für die mit dem federbeaufschlagten Kolben 9' verbundenen Platte 110.

Die Platte 110 besteht aus ferromagnetischem Material, so daß bei erregten Wicklungen 55' bzw. 61' der Schlitten 45' bzw. 47' der Kolben 9' mit dem betreffenden Schlitten gekoppelt ist.

Im unteren, d.h. dem Kolben 9' abgewandten Bereich jedes der Schlitten 45', 47' ist jeweils eine Wicklung 57' bzw. 59' vorgesehen, deren Wicklungsachsen ebenfalls im wesentlichen senkrecht zur Kolbenachse A' verlaufen. Die Wicklungen sind vorzugsweise in Form eines Topfmagneten 56' bzw. 58' ausgebildet, deren magnetischer Fluß im Bereich innerhalb der Wicklungen 57', 59' mittels eines ferromagnetischen Kerns geschlossen ist.

Die Wicklungen 57', 59' der Topfmagnete 56' bzw. 58 wirken mit einer mit dem Kolben 9' verbundenen, parallel zu dem Kolben abgewandten Oberfläche der Schlitten 45', 47' verlaufenden Platte 114 zusammen. Die Platte 114 ist dabei zur Verbesserung der Halte- bzw. Klemmkräfte zwischen den Topfmagneten und der Platte, wie in Fig.3 dargestellt, vorzugsweise so ausgebildet, daß sie in Richtung der Wicklungsachsen beweglich und in Richtung der Kolbenachse A' nicht-verschiebbar gehalten ist. Hierzu kann die Platte 114 z.B. lose zwischen den Innenwandungen 104, 102 der Lagerbüchsen 11' und 13' gehalten sein, wobei die Länge der Platte 114 im wesentlichen dem Abstand zwischen den Innenwandungen entspricht.

Bezüglich der Funktionsweise der in Fig.3 dargestellten Schweißpistole kann auf die analoge Anwendung der Ausführungen betreffend das in Fig.1 gezeigte Ausführungsbeispiel der Erfindung verwiesen werden.

Im Unterschied hierzu erfolgt die Einstellung des Hubs und der Eintauchtiefe durch die Verstellung des Anschlags 108 und einer in der Lagerbüchse 13' vorgesehenen Anschlagschraube 116, welche gleichzeitig zur Fixierung der Schraubenfeder 53' dient.

Selbstverständlich kann der Anschlag 108 auch fest fixiert und auf der Unterseite im Teil 11' eine Anschlagschraube analog zur Anschlagschraube 116 angeordnet sein. Diese Anschlagschrauben können auch durch Verstellmotoren o.ä. ferngesteuert eingestellt werden.

Die Zuführung des Schweißstroms Iₛ kann bei dieser Schweißpistole, wie in Fig.3 dargestellt, am rückwärtigen Ende des Kolbens 9' und damit in der Kolbenachse A' erfolgen. Hierzu wird der Kolben als Vollzylinder ausgebildet und muß aus elektrisch gut leitendem Material bestehen. Selbstverständlich sollte in diesem Fall das Verbindungselement 118 zwischen Kolben 9' und Platte 110 ganz oder teilweise aus isolierendem Material bestehen.

Diese Ausführungsform der Erfindung vermeidet somit die Nachteile der in Fig.1 dargestellten Ausführungsform bei gleichzeitigem Erhalt sämtlicher Vorteile, wobei ein noch geringeres Gewicht und kleinere Baugröße des Schweißkopfes erzielt wird.

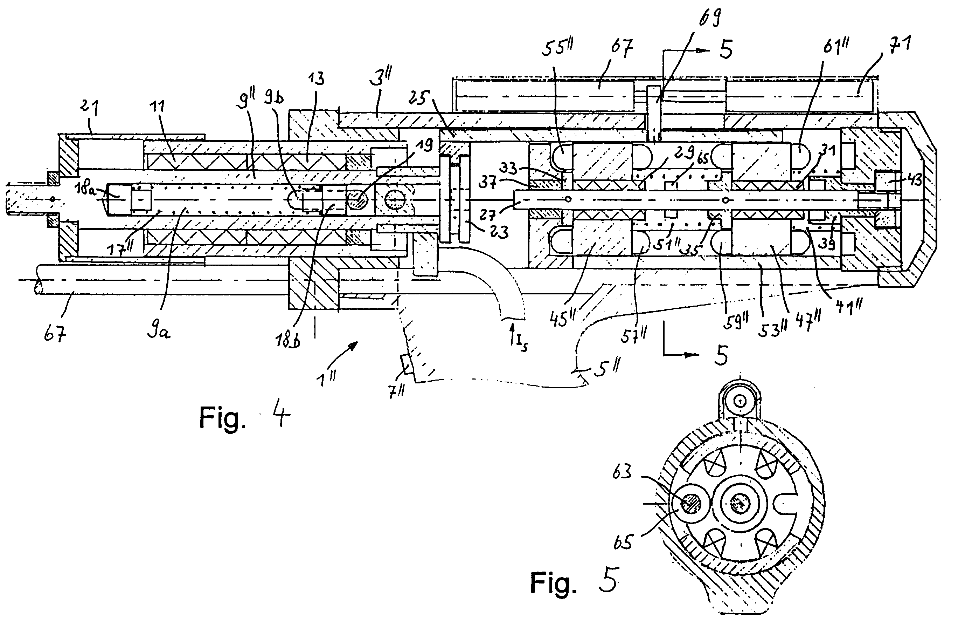

Fig.4 zeigt eine dritte Ausführungsform eines erfindungsgemäßen Schweißkopfes 1''. Die Schweißpistole 1'' besteht dabei aus einem Gehäuse 3'', mit einem Griffteil 5'', an dem ein Auslöser 7'' angeordnet ist, der in einer nicht dargestellten Steuereinheit ein Signal zum Start eines Bolzenschweißvorgangs gibt.

In dem Gehäuse 3'' ist ein Kolben 9'' axial verschiebbar mittels Linearkugellager 11 und 13 gelagert. Der Kolben 9'' weist ein Sackloch 9a auf, in dem ein federndes Element 17'' angeordnet ist, das, wie in Fig.4 dargestellt, als Schraubenfeder ausgebildet sein kann. Die Schraubenfeder 17'' wird durch einen Teil 18a am Boden des Sacklochs und ein Teil 18b im Endbereich des Sachlochs zentriert, wobei das Teil 18b durch die Feder 17'' gegen einen durch ein Langloch 9b im Kolben 9'' ragenden, ortsfesten Stift 19 gedrückt wird, der gleichzeitig als Verdrehsicherung für den Kolben dient. Die Schraubenfeder 17'' bewirkt die Rückstellung des Kolbens 9'' in seine Ausgangslage, die durch das rückwärtige Ende des Langlochs 9b im Kolben 9'' und den Stift 19 definiert ist.

Am vorderen Ende des Kolbens 9'' ist eine Abdeckung 21 vorgesehen, die den vorderen Bereich des Gehäuses 3'' übergreift und gegen Verschmutzungen abdichtet. Das vordere Ende des Kolbens ist in üblicher Weise zur Aufnahme eines nicht dargestellten Bolzenhalters ausgebildet.

Auf das rückwärtige Ende des Kolbens 9'' ist ein ringförmiges Kunststoffteil 23 aufgesetzt. Im äußeren Umfang des Rings 23 ist eine umlaufende Nut vorgesehen, welche zur Halterung eines Teils 25 in Form eines Zylindermantelsegments aus ferromagnetischem Material dient. Das auf diese Weise fest mit dem Kolben 9'' verbundene und damit axial verschiebbare Zylindermantelsegment 25 ermöglicht durch eine zeitlich gesteuerte Verkopplung mit der nachfolgend beschriebenen Einheit die Erzeugung der für den Schweißablauf erforderlichen Kolbenbewegung.

Hierzu sind im rückwärtigen Bereich des Gehäuses 3'' der Schweißpistole 1'' zwei axial bewegliche, ringförmige Schlitten 45'', 47'' um eine zylindrische Achse 27 angeordnet. Die Schlitten sind z.B. über Linearkugellager 29, 31 auf der Achse 27 verschiebbar gelagert. Die Bewegung der Schlitten 45'', 47'' ist durch fest mit der Achse 27 verbundene Anschlagringe 33 bzw. 35 in Richtung des Kolbens 9'' begrenzt. Ein federndes Element 51'', das, wie dargestellt, als Schraubenfeder ausgebildet sein kann, beaufschlagt die dem Pistolenende zugekehrte Seite des Schlittens 45'' und die dieser zugekehrte Seite des Anschlagrings 35.

Bei vorzugsweise vorgespannt montierter Schraubenfeder 51'' wird der Schlitten 45'' daher unter Anliegen einer Druckkraft in seiner Ausgangsposition (Ruheposition) gegen den Anschlagring 33 gedrückt.Die Achse 27 ist mittels Büchsen 37, 39 ebenfalls im Gehäuse 3'' verschiebbar angeordnet.

Durch ein weiteres federndes Element 41'' wird der Schlitten 47'' gegen den Anschlagring 35 gedrückt und damit auch die Achse 27 in ihre durch die Einstellmutter 43 im rückwärtigen Teil des Gehäuses 3'' gebildeten Anschlag bewegt. Mittels der auf das rückwärtige Ende der Achse 27 aufschraubbaren Einstellmutter 43 kann somit der Abhub oder Hub h der Schweißpistole eingestellt werden, der durch die unten dargestellte Bewegung des Schlittens 47'' zusammen mit der Achse 27 aus der Ausgangsposition (definiert durch den Anschlag der Einstellmutter 43 und den Anschlag 35) gegen die als Anschlag ausgebildete rückwärtige Lagerbüchse 39 erzeugt wird.

Jeder ringförmige Schlitten 45'', 47'' aus ferromagnetischem Material trägt zwei ringförmige Wicklungen 55'', 57'' bzw. 59'', 61'' eines Elektromagneten, wobei die Wicklungsachsen jeweils senkrecht zur Achse 27 gerichtet sind. Die Wicklungen werden dabei vorzugsweise, wie in Fig.5 dargestellt, in seitlichen Ausnehmungen in den ringförmigen Schlitten aufgenommen und erzeugen bei Stromdurchfluß ausreichende Haltekräfte zwischen den betreffenden Umfangsbereichen der Ringe und dem Zylindermantelsegment 53'' aus ferromagnetischem materials, das im wesentlichen gegenüber dem Segment 25 vorgesehen ist. Weitere seitliche Ausnehmungen dienen zur Reduzierung der gegenseitigen magnetischen Beeinflussung der auf einem Ring angeordneten Wicklungen und können gleichzeitig zur Verdrehsicherung der Ringe oder Schlitten 45'', 47'' mittels Führungsstangen verwendet werden.

Wie in Fig.4 und 5 dargestellt, kann die Führungsstange 63 gleichzeitig als Träger für eine weiteren Anschlagring 65 dienen, der zur Einstellung der Eintauchtiefe d bzw. der Summe aus Eintauchtiefe d und Hub h dient. Hierfür kann die Führungsstange 63 z.B. mittels einer an einem am rückwärtigen Ende der Pistole 1'' herausgeführten Ende der Stange 63 angeordneten, nicht dargestellten Einstellschraube zusammen mit dem Ring 65 einstellbar verschoben werden.

Nachfolgend wird der Ablauf eines Schweißvorgangs mit der Schweißpistole nach der Erfindung im einzelnen erläutert.

Ausgehend von der in Fig.4 dargestellten Ausgangsposition werden zunächst die Wicklungen 55'' und 59'' erregt, so daß der erste Schlitten 45'' über das Zylindermantelsegment 25 mit dem Kolben 9'' und der zweite Schlitten 47'' über das ortsfeste Zylindermantelsegment mit dem Gehäuse 3'' verkoppelt ist. Diese Ausgangslage der Schweißpistole wird sowohl bei stromlosen Wicklungen 55'', 57'', 59'' 61'' als auch nach jedem Schweißvorgang durch die federnden Elemente 17'', 41'', 51'' eingenommen.

Anschließend wird die Schweißpistole 1'' mit einem in einem am vorderen Ende des Kolbens 9'' angeordneten, nicht dargestellten Bolzenhalter gehaltenen Bolzen auf das Werkstück aufgesetzt und solange gegen das Werkstück gepreßt, bis ein am Gehäuse verstellbar angeordneter Anschlag 67 am Werkstück anliegt. Hierdurch wird zunächst der Kolben 9 zusammen mit dem Schlitten 45'' gegen den ortsfesten Anschlag 65 bewegt und gleichzeitig die Feder 51'' gespannt, da der Schlitten 47'' mit dem Gehäuse verkoppelt ist.

Dabei wird erreicht, daß nicht nur die Abhubbewegung, sondern auch die Eintauchbewegung unabhängig von unterschiedlichen Bolzenlängen oder Auflagebedingungen des Bolzens auf dem Werkstück wird.Der Ablauf des Schweißvorganges und das Ansteuern der Wicklungen erfolgt auf die anhand von Fig.1 geschilderte Weise.

In einer Ausführungsform der Erfindung kann bei der Bewegung des Kolbens 9'' in Richtung auf das Werkstück auch die Wicklungen 57'' und 61'' aktiviert sein. Hierdurch kann eine Beeinflussung der Eintauchgeschwindigkeit, insbesondere ein Eintauchen mit einer bestimmten Geschwindigkeit und einer bestimmten Verzögerung, erreicht werden.

Auch hat sich gezeigt, daß während der Wirkung der Feder 51'' ein kurzer "Bremsimpuls" auf die Wicklung 57'' und 61'' hervorragend dafür geeignet ist, um die Geschwindigkeit für das Eintauchen des Bolzens auf bei großen Bolzen erforderliche niedrige Werte zu reduzieren.

Darüber hinaus besteht die Möglichkeit sehr niedrige Eintauchgeschwindigkeiten durch die Verwendung eines beispielsweise hydraulischen Dämpfungselements 67 zu erreichen, welches mit einem am Segment 25 vorgesehenen Stift 69 zusammenwirkt.

Nach dem Eintauchen des Bolzens in die Schmelze des Werkstücks wird der Schweißstrom abgeschaltet und sämtliche Wicklungen deaktiviert, so daß der Kolben aufgrund der Beaufschlagung mittels der Feder 17'' seinen Ausgangszustand einnimmt. Nach dem Erreichen des Ausgangszustandes werden erneut die Wicklungen 25'' und 61'' aktiviert, um einen erneuten Schweißvorgang zu ermöglichen.

Zur Überwachung des Bewegungsablaufs des Schweißvorgangs kann ein Längenaufnehmer 71 vorgesehen sein, der beispielsweise die Bewegung des Stifts 69 und damit die Bewegung des Bolzens erfaßt.

Bei dem Verfahren zur Ansteuerung der Wicklungen 55'', 57'', 59'', 61'' ergibt sich der Vorteil, daß nur zwei getrennte Steuerkreise erforderlich sind, da jeweils die Wicklungen 55'' und 59'' bzw. 57'' und 61'' gleichzeitig angesteuert werden.

Die Zuführung des Schweißstroms Iₛ kann bei dieser Schweißpistole, wie in Fig.4 dargestellt, am rückwärtigen Ende des Kolbens 9'' und damit im wesentlichen in der Kolbenachse erfolgen. Hierdurch werden unerwünschte Blaseffekte durch eine unsymmetrische Schweißstromzuführung vermieden. Selbstverständlich muß das Teil 23 zwischen Kolben 9'' und Zylindermantelsegment 25 ganz oder teilweise aus isolierendem Material bestehen.

Die Erfindung schafft somit einen Schweißkopf für das Bolzenschweißen mit Hubzündung, welcher gegenüber bekannten Schweißköpfen präziser arbeitet, dazu baukleiner und leichter und somit bequemer handhabbar ist.

Des weiteren läßt sich der erfindungsgemäße Schweißkopf auch für das Bolzenschweißen mit Spitzenzündung einsetzen, wenn das Zünden des Lichtbogens, insbesondere durch Zuschalten der üblicherweise verwendeten Kondensatorbatterie, zeitlich nach der Abhubbewegung vor Auftreffen der Bolzenspitze auf das Werkstück erfolgt.

## Patentansprüche

1. Schweißkopf für eine Bolzenschweißvorrichtung für das Bolzenschweißen mit Hubzündung mit
a) einem in axialer Richtung verschiebbar angeordneten, gegen eine Rückstellkraft aus einer Ausgangsstellung auslenkbaren Kolben, dessen eines Ende mit einem Bolzenhalter für einen zu verschweißenden Bolzen zusammenwirkt,
**dadurch gekennzeichnet,**
b) daß ein erster und ein zweiter axial verschiebbarer Schlitten (45, 45', 45'', 47, 47', 47'') vorgesehen ist,
c) daß der erste und zweite Schlitten mittels eines ersten federnden Elementes (51, 51', 51'') verkoppelt sind,
c) daß auf dem ersten und zweiten Schlitten jeweils eine erste und zweite steuerbare Vorrichtung (54, 56, 58, 60, 54', 56', 58', 60', 54'', 56'', 58'', 60'') zum verkoppeln des ersten und zweiten Schlittens mit dem Kolben (9, 9', 9'') und/oder einem in axialer Richtung nicht-verschiebbar gehaltenen oder gehäusefesten Teil (3, 114, 206) des Schweißkopfes (1, 1', 1'') angeordnet ist.

2. Schweißkopf nach Anspruch 1, **dadurch gekennzeichnet**, daß der zweite Schlitten (47, 47', 47'') durch eine mittels des ersten federnden Elements (51, 51', 51'') übertragene Kraft gegen die Kraft eines zweiten federnden Elements 53, 53', 53'') auslenkbar ist.

3. Schweißkopf nach Anspruch 1 und 2, **dadurch gekennzeichnet**, daß das erste und zweite federnde Element (51, 51', 51''; 53, 53', 53'') vorgespannt sind.

4. Schweißkopf nach Anspruch 1 oder 2, **dadurch gekennzeichnet**, daß der erste und zweite Schlitten (45,47) als den Kolben umgebende Ringe ausgebildet sind.

5. Schweißkopf nach Anspruch 1 oder 2, **dadurch gekennzeichnet**, daß der erste und zweite Schlitten (45, 45', 45'', 47, 47', 47'') in einer zur Kolbenachse (A', A'') parallel verlaufenden Führung verschiebbar gehalten sind.

6. Schweißkopf nach einem der vorhergehenden Ansprüche, **dadurch gekennzeichnet**, daß die ersten und zweiten steuerbaren Vorrichtungen als Elektromagnete (54, 56, 58, 60, 54', 56', 58', 60', 54'', 56'', 58'', 60'') ausgebildet sind.

7. Schweißkopf nach Anspruch 5, insofern dieser auf Anspruch 4 rückbezogen ist, **dadurch gekennzeichnet**, daß die Wicklungsachsen der Elektromagnete (54', 56', 58', 60', 54'', 56'', 58''. 60'') senkrecht zur Kolbenachse (A', A'') verlaufen.

8. Schweißkopf nach Anspruch 6, **dadurch gekennzeichnet**, daß die Wicklungsachsen der Elektromagnete (54, 56, 58. 60, 54', 56', 58', 60', 54'', 56'', 58'', 60'') der ersten und zweiten steuerbaren Vorrichtungen identisch sind und die Wicklungen (55', 57' 59', 61') in Bezug auf die Kolbenachse (A') in radialer Richtung versetzt und auf dem ersten und zweiten Schlitten (45', 47') angeordnet sind.

9. Schweißkopf nach eines der vorhergehenden Ansprüche, **dadurch gekennzeichnet**, daß der erste und zweite Schlitten 45'', 47'') als eine Achse (27) umgebende Ringe ausgebildet sind und die zwei Wicklungen eines Schlittens (55'', 57'', 59'', 61'') in Nuten um 180 versetzt mit Wicklungsachsen senkrecht zur Bewegungsrichtung angeordnet sind.

10. Schweißkopf nach einem der vorhergehenden Ansprüche **dadurch gekennzeichnet**, daß die Bewegung der ersten und/oder zweiten Schlitten (45, 45', 45'', 47, 47', 47'') durch jeweils einen verstellbaren Anschlag 43, 108, 33, 65'', 39'') begrenzt ist.

11. Schweißkopf nach einem der vorhergehenden Ansprüche, **dadurch gekennzeichnet**, daß der Kolben (9', 9'') aus einem elektrisch leitenden Material besteht und die Zuführung des Schweißstroms in der Achse (9', 9'') des Kolbens erfolgt.

12. Verfahren zum Steuern einer Bolzenschweißvorrichtung mit einem nach einem der Ansprüche 1 bis 11 ausgebildeten Schweißkopf und einer Steuereinrichtung,
bei welchem Verfahren Schaltvorgänge für die steuerbaren Vorrichtungen auf den Bewegungsablauf nach den vorgegebenen Arbeitsbedingungen in einem genau einstellbaren Zeitprogramm ablaufen und mit den Schaltvorgängen der Schweiß-Stromquelle abgestimmt sind (Fig.2), wobei
ein verkürztes Steuerprogramm mit Spannen (55, 59), Klemmen (55, 59, 57, 61), Hub (57, 61) für Bolzen, ab einem bestimmten Durchmesser (> ca. 16mm) oder
ein vollständiges Steuerprogramm für einen begrenzten Eintauchweg mit Spannen (55, 59), Klemmen (55, 59, 57, 61), Hub (57, 61), Klemmen (55, 59, 57, 61), Eintauchen (55, 59) für Bolzen mit einem entsprechend kleineren Durchmesser (≧ 16 mm) gewählt wird.

13. Verfahren nach Anspruch 12, bei welchem mittels eines einziger Steuerkreises gleichzeitig die erste steuerbare Vorrichtung (55, 55', 55'') des ersten Schlittens und die zweite steuerbare Vorrichtung (59, 59', 59'') des zweiten Schlittens sowie gleichzeitig die zweite steuerbare Vorrichtung (57, 57', 57'') des ersten Schlittens und die erste steuerbare Vorrichtung (60, 60', 60'') des zweiten Schlittens angesteuert werden.

14. Verfahren nach Anspruch 12, bei welchem mittels während der Bewegung des ersten Schlittens (45, 45', 45'') und des damit verkoppelten Bolzens in Richtung auf das Werkstück
a) die zweite steuerbare Vorrichtung (57, 57', 57'') des ersten Schlittens (45, 45', 45'') und/oder die erste steuerbare Vorrichtung (61, 61', 61'') des zweiten Schlittens (47, 47', 47'') mit einem Bremsstrom oder einem kurzen Bremsstrom-Impuls beaufschlagt wird, oder
b) beim Auftreffen des Bolzens auf das Werkstück der Lichtbogen durch Spitzenzündung gezündet wird.
